# EUROPEAN PATENT APPLICATION

(11) **EP 4 851 211 A1**
(43) Date of publication of application: **09.12.2026**
(21) Application number: 26181437.0
(22) Date of filing: 27.05.2026
(51) Int. Cl.: C08G 59/50, C08G 59/70, C08K 3/36, C08K 5/5415, C09D 163/00, C09J 163/00

(54) **EPOXY RESIN COMPOSITION**

(30) Priority: 02.06.2025 JP 2025092135
(71) Applicant: SHIN-ETSU CHEMICAL CO., LTD., Tokyo 100-0005 (JP)
(72) Inventor: MOTEGI, Ryohei, Annaka-shi, 379-0224 (JP); KUSHIHARA, Naoyuki, Annaka-shi, 379-0224 (JP)
(74) Representative: V.O.

(57) **Abstract**

One of the purposes of the present invention is to provide an epoxy resin composition with excellent reactivity that produces a cured product having a good appearance. The present invention provides an epoxy resin composition comprising (A) an epoxy resin that is not silicone-modified and has two or more epoxy groups per molecule, (B) an aromatic amine curing agent having two or more amino groups per molecule, in the amount defined in claim 1, (C) a metal chelate compound having an average particle size of 0.1 to 90 µm, in the amount defined in claim 1, (D) one or more selected from the group consisting of an alkoxysilane having one or more phenyl groups per molecule and one or more alkoxy groups per molecule, and a partially hydrolyzed condensate of the alkoxysilane, in the amount defined in claim 1, and (E) an inorganic filler, in the amount defined in claim 1.

## Description

An aspect of the present invention relates to an epoxy resin composition. A more preferred aspect of the present invention relates to an epoxy resin composition in a liquid form at 25°C.

### BACKGROUND OF THE INVENTION

Epoxy resins are used in a wide range of fields, such as electronic components, adhesives, and coatings. Since the properties and curing conditions of epoxy resins vary depending on the type of curing agent used, epoxy resins are used in combination with various curing agents according to their intended applications. Typical curing agents include amines, acid anhydrides, and phenols. Among them, aromatic amine curing agents provide cured products having a good balance of adhesion, heat resistance, and other desirable properties; however, they require high-temperature curing.

In recent years, increasing attention has been paid to the development of products aligned with the Sustainable Development Goals (SDGs). In order to conserve energy, it is desirable for epoxy resins to have shorter curing times or lower curing temperatures. In order to improve curability, it is common to add a curing accelerator to an epoxy resin composition.

Composite catalysts comprising, for example, metal complexes and silane compounds have been proposed as curing accelerators for epoxy resins. These composite catalysts do not remain as ionic impurities after acting on the curing of the epoxy resin, thereby increasing the curing rate while preventing migration in the cured product (Patent Literature 1 and 2).
Patent Literature 1: Japanese Patent Application Laid-Open No.2008-255178
Patent Literature 2: Japanese Patent Application Laid-Open No.2012-117033

### BRIEF SUMMARY OF THE INVENTION

However, if the curing catalyst added to the epoxy resin composition is insufficiently dispersed and mixed, the curability may become non-uniform, which may result in variations in cured properties and appearance defects. In particular, poor dispersion may occur when a solid curing catalyst is used.

Accordingly, one of the purposes of the present invention is to provide an epoxy resin composition with excellent reactivity that produces a cured product having a good appearance.

In view of the aforementioned circumstances, the present inventors have conducted extensive studies and have found that the above problems can be solved by adding a metal chelate compound having a particle size within a specific range and a silane compound, thereby completing the present invention.

That is, an aspect of the present invention provides an epoxy resin composition of the following item [1].
[1] An epoxy resin composition, comprising
   (A) an epoxy resin that is not silicone-modified and has two or more epoxy groups per molecule,
   (B) an aromatic amine curing agent having two or more amino groups per molecule, in an amount such that the ratio of moles of amino groups in component (B) is 0.8 to 1.2, relative to one molar equivalent of epoxy groups in component (A),
   (C) a metal chelate compound having an average particle size of 0.1 to 90 µm, in an amount of 0.05 or more parts by mass and less than 3 parts by mass, relative to a total 100 parts by mass of components (A) and (B),
   (D) one or more selected from the group consisting of an alkoxysilane having one or more phenyl groups per molecule and one or more alkoxy groups per molecule, and a partially hydrolyzed condensate of the alkoxysilane, in an amount of 0.5 or more parts by mass and less than 3 parts by mass, relative to a total 100 parts by mass of components (A) and (B), and
   (E) an inorganic filler, in an amount of 10 parts or more by mass and 1,000 or less parts by mass, relative to a total 100 parts by mass of components (A) and (B).
   Aspects of the present invention also relate to an epoxy resin composition according to any of the following items [2] to [9].
[2] The epoxy resin composition according to said item [1], wherein component (C) is a compound represented by the following formula (1): 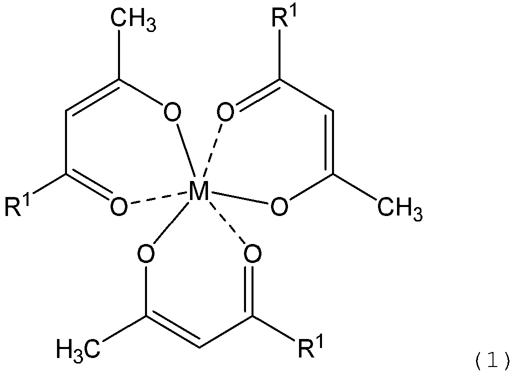 wherein M is aluminum or gallium, and R¹ is, independently of each other, an alkoxy group having 1 to 5 carbon atoms or an alkyl group having 1 to 12 carbon atoms.
[3] The epoxy resin composition according to said item [1] or [2], wherein component (C) is one or more selected from the group consisting of aluminum-tris(acetylacetonate), aluminum-tris(ethyl acetoacetate), and gallium-tris(acetylacetonate).
[4] The epoxy resin composition according to any one of said items [1] to [3], wherein the alkoxysilane of component (D) has one or more alkoxy groups having 1 to 4 carbon atoms.
[5] The epoxy resin composition according to any one of said items [1] to [4], wherein the partially hydrolyzed condensate of component (D) is an oligomer having a degree of polymerization of 5 or less and having one or more silanol groups.
[6] The epoxy resin composition according to any one of said items [1] to [5], wherein in component (D)
   the alkoxysilane is represented by the following formula (2): 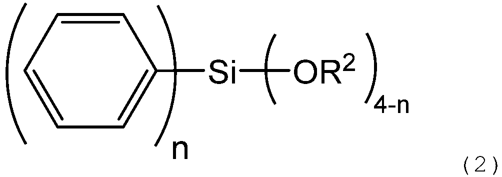 wherein R² is an alkyl group having 1 to 4 carbon atoms, and n is an integer of 1 to 3,
   and the partially hydrolyzed condensate of component (D) is an oligomer of the alkoxysilane represented by said formula (2) having a degree of polymerization of 5 or less.
[7] The epoxy resin composition according to any one of said items [1] to [6], wherein the ratio of the mass of component (D) relative to the mass of component (C), expressed as the mass ratio of [(D)/(C)], is 0.05/1 to 20/1.
[8] The epoxy resin composition according to any one of said items [1] to [7], wherein component (E) is an inorganic filler surface-treated with a silane coupling agent.
[9] The epoxy resin composition according to any one of said items [1] to [8], further comprising (F) a silicone-modified epoxy resin in an amount of 0.1 to 1,000 parts by mass, relative to 100 parts by mass of component (A).
   Aspects of the present invention also relate to any of the following items [10] to [15].
[10] A potting agent comprising the epoxy resin composition according to any one of said items [1] to [9].
[11] A power module encapsulated with the potting agent according to said item [10].
[12] An underfill material comprising the epoxy resin composition according to any one of said items [1] to [9].
[13] A flip-chip package encapsulated with the underfill material according to said item [12].
[14] An epoxy resin adhesive comprising the epoxy resin composition according to any one of said items [1] to [9].
[15] A semiconductor device comprising a layer formed from the epoxy resin adhesive according to said item [14].

According to one aspect of the present invention, an epoxy resin composition cures in a short time or at a low temperature, and provides a cured product having a good appearance.

### DETAILED DESCRIPTION OF THE INVENTION

The present invention will be described in detail below. The maximum and minimum values of numerical ranges described herein may include values obtained by rounding.

### (A) Epoxy Resin

According to an aspect of the present invention, component (A) is an epoxy resin that is not silicone-modified and has two or more epoxy groups per molecule, and is used as a base resin in epoxy resin compositions according to aspects of the present invention. The epoxy resin has two or more epoxy groups per molecule, preferably three or more, and may be appropriately selected from known epoxy resins. Component (A) may be in solid or liquid form at 25 °C, but is preferably in liquid form in view of handling properties. Component (A) may be used alone or in combination of two or more thereof. When a solid epoxy resin is used, it is preferably used in combination with a liquid epoxy resin. In such cases, the amount of the solid epoxy resin is 0 to 30% by mass, preferably 5 to 20% by mass, relative to the total mass of component (A). By using the solid epoxy resin and the liquid epoxy resin in combination within the above range, the epoxy resin composition has good handling properties and can also improve the heat resistance of the cured product.

Examples of epoxy resins that are in liquid form at 25 °C include, for example, a liquid bisphenol A-type epoxy resin in liquid form, a liquid bisphenol F-type epoxy resin, a liquid naphthalene-type epoxy resin, a liquid aminophenol-type epoxy resin, a liquid hydrogenated bisphenol-type epoxy resin, a liquid alcohol ether-type epoxy resin, a liquid fluorene-type epoxy resin, and a liquid alicyclic epoxy resin. Among these, the bisphenol A-type epoxy resin, the bisphenol F-type epoxy resin, the naphthalene-type epoxy resin, and the aminophenol-type epoxy resin are preferred.

Examples of epoxy resins that are in a solid form at 25 °C include, for example, biphenol-type epoxy resins such as a 3,3',5,5'-tetramethyl-4,4'-biphenol-type epoxy resin and a 4,4'-biphenol-type epoxy resin; a phenol novolac-type epoxy resin, a cresol novolac-type epoxy resin, a bisphenol A novolac-type epoxy resin, a stilbene-type epoxy resin, a triazine skeleton-containing epoxy resin, a fluorene skeleton-containing epoxy resin, a trisphenol alkane-type epoxy resin, a biphenyl-type epoxy resin, a xylylene-type epoxy resin, a biphenyl aralkyl-type epoxy resin, a naphthalene-type epoxy resin, a dicyclopentadiene-type epoxy resin, an alicyclic epoxy resin, diglycidyl ether compounds of polyfunctional phenols and polycyclic aromatic compounds such as anthracene, and phosphorus-containing epoxy resins obtained by introducing phosphorus compounds into these compounds.

Component (A) preferably has a viscosity of 100 to 10,000 mPa·s at 25 °C, and more preferably 300 to 5,000 mPa·s at 25 °C. When a solid epoxy resin is used, it is preferably used in combination with a liquid epoxy resin such that the resulting mixture has a viscosity of 3,000 to 10,000 mPa·s at 25 °C at the above blending ratio. The viscosity is measured using a B-type viscometer in accordance with Japanese Industrial Standards (JIS) K 7117-1:1999. The epoxy equivalent of component (A) is not particularly limited, but is, for example, 80 to 120 g/eq, preferably 90 to 180 g/eq.

The amount of component (A) is preferably 1 to 40% by mass, more preferably 5 to 30% by mass, even more preferably 5 to 20% by mass, based on the total mass of the epoxy resin composition.

### (B) Aromatic Amine Curing Agent

According to an aspect of the present invention, component (B) is an aromatic amine curing agent having two or more amino groups per molecule and is used as a curing agent that reacts with component (A) in the epoxy resin composition. Component (B) may be one or a combination of two or more aromatic amine curing agents appropriately selected from known aromatic amine curing agents. Component (B) may be in solid or liquid form at 25 °C, but is preferably in liquid form in view of handling properties. Component (B) may be used alone or in combination of two or more thereof. When a solid aromatic amine curing agent is used, it is preferably used in combination with a liquid aromatic amine curing agent. By doing so, good workability is achieved and the heat resistance of the cured product can also be improved. The amount of the solid aromatic amine curing agent is 0 to 30% by mass, preferably 5 to 20% by mass, based on the total mass of component (B). By using the solid aromatic amine curing agent and the liquid aromatic amine curing agent in combination within the above range, the epoxy resin composition has good handling properties, and the heat resistance of the cured product is improved.

The amount of component (B) is an amount effective to cure component (A) and an optional component (F) to be described below. Preferably, the amount of component (B) is such that the equivalent ratio of amino groups in component (B) is 0.8 to 1.2, more preferably 0.9 to 1.1, relative to one equivalent of epoxy groups in component (A). When component (F) is present, the amount of component (B) is preferably such that the equivalent ratio of amino groups in component (B) is 0.8 to 1.2, more preferably 0.9 to 1.1, relative to one equivalent of epoxy groups in components (A) and (F) combined. If the equivalent ratio is less than the lower limit, the heat resistance of the cured product may be reduced. If the equivalent ratio is larger than the upper limit, the cured product may become brittle.

Examples of the aromatic amine curing agents that are in a liquid form at 25 °C include 3,3'-diethyl-4,4'-diaminodiphenylmethane, 2,4-diamino-3,5-diethyltoluene, 2,6-diamino-3,5-diethyltoluene, and dimethylthiotoluenediamine. Among them, 3,3'-diethyl-4,4'-diaminodiphenylmethane is preferred.

Examples of the aromatic amine curing agents that are in a solid form at 25°C include 4,4'-methylenebis(2-ethyl-6-methylaniline), 2,2'-diisopropyl-6,6'-dimethyl-4,4'-methylenedianiline, 2,2',6,6'-tetraisopropyl-4,4'-methylenedianiline, 4,4'-methylenebis(2,6-diethylaniline), 4,4'-methylenebis(3-chloro-2,6-diethylaniline), 1,3-phenylenediamine, 2,4-diaminotoluene, 2,6-diaminotoluene, 2,4,6-trimethyl-1,3-phenylenediamine, 3-aminobiphenyl, 3-amino-4-methoxybiphenyl, 2-aminofluorene, 2-amino-9-fluorenone, 2,7-diaminofluorene, 3-aminobenzophenone, 3,4'-diaminodiphenylmethane, 3,3'-diaminodiphenylmethane, 3,4-diaminobenzophenone, and 3,3'-diaminobenzophenone. Among them, 4,4'-methylenebis(2-ethyl-6-methylaniline) is preferred.

### (C) Metal chelate compound

In the epoxy resin composition according to an aspect of the present invention, component (C) is a catalyst component that promotes curing of the epoxy resin. Component (C) acts on epoxy groups as a composite catalyst together with component (D) to be described below, and if either component (C) or component (D) is absent, the curing reaction cannot be sufficiently promoted. According to an aspect of the present invention, component (C) is a metal chelate compound having an average particle size of 0.1 to 90 µm and a solid form at 25 °C.

Examples of the metal chelate that is in a solid form at 25 °C include compounds represented by the following formula (1) in which a diketonate ligand is coordinated to a metal. 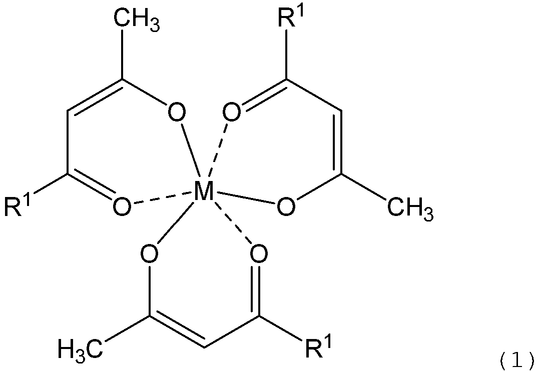 In formula (1), R¹ is, independently of each other, an alkoxy group having 1 to 5 carbon atoms or an alkyl group having 1 to 12 carbon atoms. R¹ is preferably an alkoxy group having 1 to 4 carbon atoms or an alkyl group having 1 to 4 carbon atoms. Examples of the alkoxy group include a methoxy group and an ethoxy group; and examples of the alkyl group include a methyl group and an ethyl group. Examples of M include a metal atom such as aluminum or gallium.

Examples of the metal chelate compound represented by said formula (1) include aluminum-tris(acetylacetonate), aluminum-tris(ethyl acetoacetate), and gallium-tris(acetylacetonate). These may be used alone or in combination of two or more thereof. Among them, aluminum-tris(acetylacetonate) is more preferred.

The amount of component (C) is 0.05 parts or more by mass and less than 3 parts by mass, preferably 0.1 to 2 parts by mass, and more preferably 0.2 to 1 part by mass, relative to 100 parts by mass of components (A) and (B) in total. If the amount of component (C) is less than the lower limit, the catalytic effect may be insufficient. If the amount of component (C) is larger than the upper limit, the pot life may be shortened.

Component (C) has an average particle size of 0.1 to 90 µm, preferably 0.5 to 70 µm, more preferably 1 to 50 µm. In the present invention, the average particle size may be the volume average particle size as measured by laser diffraction. Component (C) may be used alone or in combination of two or more metal chelates having different average particle sizes. When two or more components are used in combination, it is sufficient that the average particle size of component (C) as a whole satisfies the above range. If the average particle size of component (C) is less than the lower limit, the catalyst may have poor handling properties, whereas if it is greater than the upper limit, voids may occur on the surface of the cured product and the appearance may be impaired.

The melting point of component (C) is preferably 100 °C or more, more preferably 150 °C or more.

### (D) Silane compound

According to an aspect of the present invention, component (D) is a silane compound having one or more phenyl groups per molecule, and is a catalyst component that is used in combination with component (C) and promotes curing of the epoxy resin. Component (D) is one or more selected from the group consisting of an alkoxysilane having one or more phenyl groups per molecule and one or more alkoxy groups per molecule, and a partially hydrolyzed condensate of the alkoxysilane. Component (D) may comprise a partially hydrolyzed condensate of an alkoxysilane compound. The partially hydrolyzed condensate is an oligomer in which some alkoxysilanes are hydrolyzed and condensed with other alkoxysilanes. The partially hydrolyzed condensate is preferably an oligomer that is a hydrolytic condensate having a degree of polymerization of 5 or less.

Component (D) is preferably one or more selected from the group consisting of an alkoxysilane having one or more phenyl groups per molecule and one or more alkoxy groups having 1 to 4 carbon atoms per molecule, and a partially hydrolysate of the alkoxysilane. More preferably, component (D) is one or more selected from the group consisting of an alkoxysilane represented by the following formula (2) and oligomers that is a partially hydrolyzed condensates of the alkoxysilane having a degree of polymerization of 5 or less.

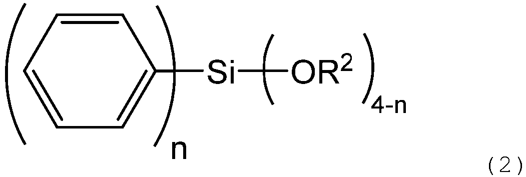

In formula (2), R² is an alkyl group having 1 to 4 carbon atoms. Examples of R² include a methyl group, an ethyl group, and an isopropyl group. Among them, a methyl group is preferred. "n" is an integer of 1 to 3. "n" is preferably 2 or 3, more preferably 2, in view of improving the reactivity and pot life.

Examples of component (D) include diphenyldimethoxysilane, diphenyldiethoxysilane, diphenyldiisopropoxysilane, and methoxytriphenylsilane. These may be used alone or in combination with two or more thereof. Among them, diphenyldimethoxysilane is more preferred. A partially hydrolyzed condensate of such an alkoxysilane compound may be used. The partially hydrolyzed condensate is preferably an oligomer having a degree of polymerization of 5 or less.

The amount of component (D) is 0.5 parts or more by mass and less than 3 parts by mass, preferably 0.8 to 2.5 parts by mass, more preferably 1 to 2 parts by mass, relative to a total 100 parts by mass of components (A) and (B). If the amount of component (D) is less than the lower limit, the catalyst effect may be insufficient. If the amount of component (D) is larger than the upper limit, the pot life may be shortened.

The mechanism of action of the composite catalyst according to the present invention will be described in detail below. According to an aspect of the present invention, the metal chelate compound (C) and the silane compound (D) are added to the epoxy resin composition to act as a composite catalyst to promote curing of the epoxy resin. In this case, the substituent group of the silane compound (D) is bulky like a phenyl group and suppresses interaction with the metal chelate compound (C) at 25 °C, but upon heating during use, the thermal motion of the components increases, allowing the metal chelate compound (C) and the silane compound (D) to interact more easily. The composite formed by the interaction of the two components exhibits enhanced catalytic activity as a Bronsted acid, due to electron delocalization in the phenyl group. The mechanism of action of these two components may enable the epoxy resin composition to achieve both a long pot life and excellent curability.

In the epoxy resin composition according to an aspect of the present invention, the ratio of the mass of component (D) relative to the mass of component (C), the mass ratio of (D)/(C), is preferably 0.05/1 to 20/1, more preferably 0.06/1 to 15/1, and even more preferably 0.1/1 to 10/1. If the amount of component (D) relative to component (C) is too high, the pot life may be shortened.

### (E) Inorganic filler

Component (E) is an inorganic filler, and is added to reduce the thermal expansion coefficient and improve the moisture/heat resistance reliability of the composition.

Examples of component (E) include silicas such as fused silica, crystalline silica, and cristobalite; and alumina, silicon nitride, aluminum nitride, boron nitride, titanium oxide, glass fiber, and magnesium oxide. These inorganic fillers may be used alone or in combination with two or more thereof. The average particle size and shape of these inorganic fillers may be selected depending on the intended application. Among them, spherical alumina, spherical fused silica, and glass fiber are preferred. The average particle size of the inorganic filler is, for example, preferably 1 to 100 µm, more preferably 5 to 90 µm, even more preferably 10 to 80 µm. Herein, the average particle size refers to the volume-based 50% cumulative diameter as measured by dynamic light scattering using laser light.

Preferably, component (E) is an inorganic filler surface-treated with a silane coupling agent. Examples of the silane coupling agent include an aminosilane coupling agent, an epoxy silane coupling agent, a vinylsilane coupling agent, a methacrylic silane coupling agent, an acrylic silane coupling agent, a mercaptosilane coupling agent, a triazine functional group-type silane coupling agent, an isocyanate functional group-type silane coupling agent, an isocyanuric acid functional group-type silane coupling agent, a benzotriazole functional group-type silane coupling agent, an acid anhydride functional group-type silane coupling agent, an azasilacyclopentane functional group-type silane coupling agent, an imidazole functional group-type silane coupling agent, and an unsaturated group-containing silane coupling agent. Component (E) is preferably the inorganic filler surface-treated with one or more silane coupling agents selected from the aforementioned silane coupling agents.

Examples of the aminosilane coupling agent include:
N-2-(aminoethyl)-3-aminopropyltrimethoxysilane, 3-aminopropyltriethoxysilane,
N-phenyl-3-aminopropyltrimethoxysilane, 3-aminopropyltriethoxysilane,
3-triethoxysilyl-N-(1,3-dimethylbutylidene)propylamine, and
N-phenyl-3-aminopropyltrimethoxysilane.

Examples of the epoxy silane coupling agent include 3-glycidoxypropyltrimethoxysilane, 3-glycidoxypropylmethyldiethoxysilane, 2-(3,4-epoxycyclohexyl)ethyltrimethoxysilane, and 8-glycidoxyoctyltrimethoxysilane.

Examples of the vinylsilane coupling agent include vinyltrimethoxysilane and vinyltriethoxysilane.

Examples of the methacrylic silane coupling agent include 3-methacryloxypropylmethyldimethoxysilane, 3-methacryloxypropyltrimethoxysilane, 3-methacryloxypropylmethyldiethoxysilane, 3-methacryloxypropyltriethoxysilane, and 8-methacryloxyoctyltrimethoxysilane.

Examples of the acrylic silane coupling agent include 3-acryloxypropyltrimethoxysilane.

Examples of the mercaptosilane coupling agent include 3-mercaptopropylmethyldimethoxysilane and 3-mercaptopropyltrimethoxysilane.

The amount of the silane coupling agent relative to the inorganic filler is not particularly limited. Surface treatment of the inorganic filler with the silane coupling agent may be carried out by a conventional method. The epoxy resin composition of the present invention preferably comprises, as component (E), an inorganic filler previously surface-treated with the silane coupling agent.

In the present invention, the aforementioned silane coupling agent is used for surface treatment of the inorganic filler. The epoxy resin composition of the present invention is not formulated to comprise the aforementioned silane coupling agent as a component thereof. Accordingly, in the most preferred embodiment, the epoxy resin composition of the present invention does not comprise the aforementioned silane coupling agent. More preferably, the epoxy resin composition of the present invention does not comprise amino silane coupling agents, epoxy silane coupling agents, or vinyl silane coupling agents such as vinyltrimethoxysilane.

The amount of component (E) is 10 to 1,000 parts by mass, preferably 100 to 750 parts by mass, more preferably 200 to 500 parts by mass, relative to a total 100 parts by mass of components (A) and (B).

### (F) Silicone-modified epoxy resin

An epoxy resin composition according to an aspect of the present invention may also comprise (F) a silicone-modified epoxy resin. By comprising component (F), the curability and moisture resistance of the epoxy resin composition are improved. Examples of component (F) include a copolymer obtained by hydrosilylation of an alkenyl group-containing epoxy resin with an organohydrogen polysiloxane. More preferably, component (F) does not comprise 1,3-bis(3-glycidoxypropyl)-1,1,3,3-tetramethyldisiloxane.

The epoxy equivalent of the silicone-modified epoxy resin is 100 to 1,000, preferably 150 to 800. The silicon content of the silicone-modified epoxy resin is 1 to 50 % by mass, preferably 10 to 40 % by mass. The melt viscosity of the silicone-modified epoxy resin is preferably 100 to 3,000 mPa·s as measured with an ICI viscometer at 150 °C.

Examples of the alkenyl group-containing epoxy resin include alkenyl group-containing epoxy resins represented by the following formulas (3) to (5) .

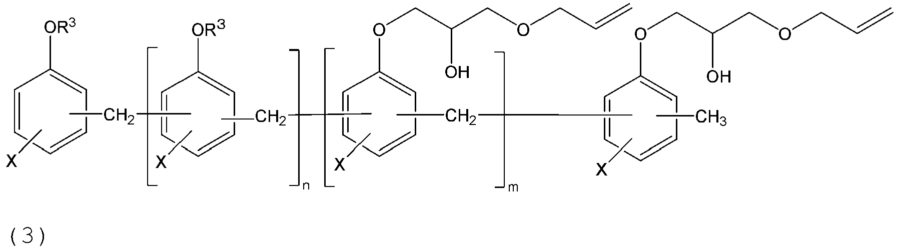

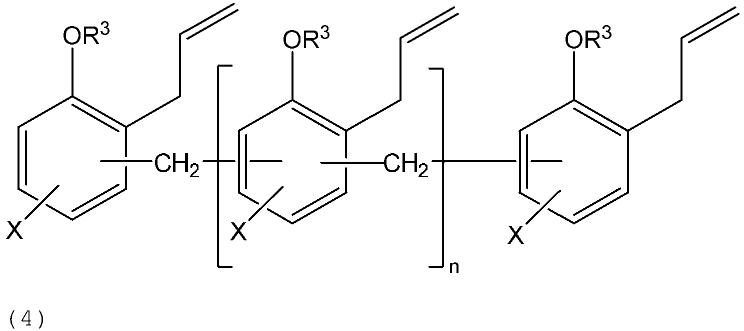

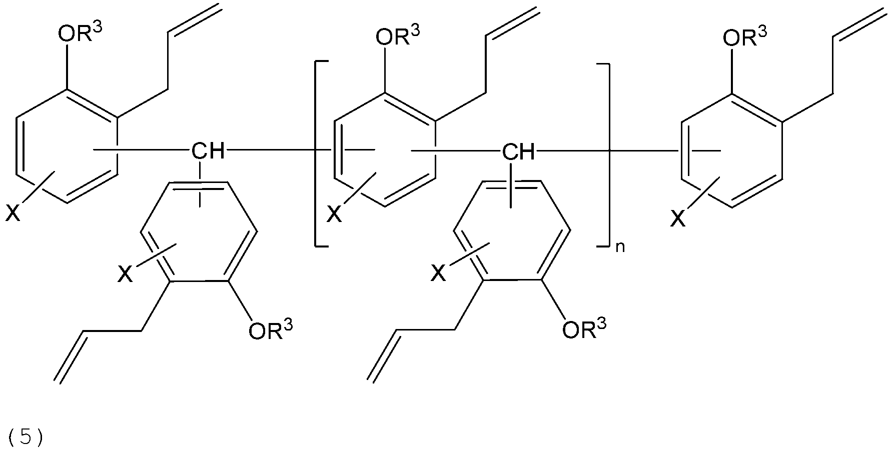

In formulas (3) to (5), R³ is a glycidyl group (2,3-epoxypropyl group), and X is, independently of each other, a hydrogen atom or a bromine atom. "n" is a number of 0 or more, preferably 0 to 50, and more preferably 1 to 20. "m" is an integer of 0 or more, preferably 1 to 5, and more preferably 1.

The organohydrogen polysiloxane is preferably an organohydrogen polysiloxane having one or more hydrosilyl groups per molecule, represented by one of the following formulas (6), (7), and (8). Among them, an organohydrogen polysiloxane represented by the following formula (6) is more preferred. 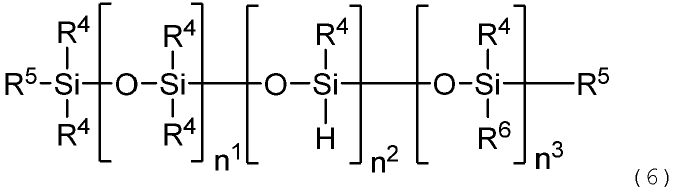 In formula (6), the sequence of each parenthesized siloxane unit is not limited to that shown in formula (6), and the siloxane units may be randomly arranged or may form a block structure. R⁴ is a substituted or unsubstituted monovalent hydrocarbon group having 1 to 10 carbon atoms. R⁵ is, independently of each other, a hydrogen atom or a monovalent hydrocarbon group having 1 to 10 carbon atoms. R⁶ is a group represented by the following formula (6'). n¹ is an integer of 5 to 200, n² is an integer of 0 to 3, and n³ is an integer of 0 to 10. At least one of the R⁵s is a hydrogen atom.

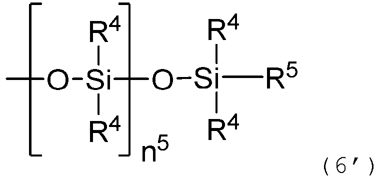

In formula (6'), R⁴ and R⁵ are as defined above, and n⁵ is an integer of 1 to 10.

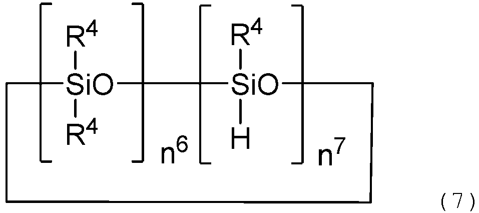

In formula (7), each parenthesized siloxane unit may be randomly arranged or may form a block structure. R⁴ is as defined above, n⁶ is an integer of 1 to 10, n⁷ is 1 or 2, and the value of n⁶ + n⁷ is 3 to 12. 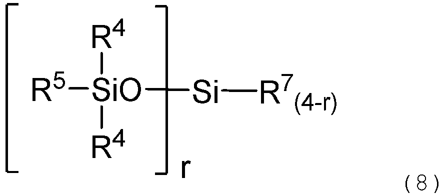 In formula (8), R⁴ and R⁵ are as defined above, r is an integer of 0 to 3, R⁷ is a hydrogen atom or one or more groups selected from an alkyl group having 1 to 10 carbon atoms and an alkoxyalkyl group having 2 to 10 carbon atoms, and one or more R⁵s or R⁷s are a hydrogen atom.

In said formula (6), R⁴ is a substituted or unsubstituted monovalent hydrocarbon group having 1 to 10 carbon atoms. Examples of the monovalent hydrocarbon group include alkyl groups such as a methyl group, an ethyl group, an n-propyl group, an isopropyl group, an n-butyl group, an isobutyl group, a tert-butyl group, a pentyl group, a neopentyl group, a hexyl group, a cyclohexyl group, an octyl group, and a decyl group; aryl groups such as a phenyl group and a tolyl group; and aralkyl groups such as a benzyl group and a phenylethyl group.

R⁵ is, independently of each other, a hydrogen atom or a monovalent hydrocarbon group having 1 to 10 carbon atoms, in which one or more R⁵s are a hydrogen atom. Examples of the monovalent hydrocarbon group include the examples defined for R⁴.

"n¹" is an integer of 5 to 200, preferably 9 to 150. "n²" is an integer of 0 to 3, preferably 0 to 2. "n³" is an integer of 0 to 10, preferably 0 to 5. R⁶ is a group represented by said formula (6'). In formula (6'), R⁴ and R⁵ are as defined above, and "n⁵" is an integer of 1 to 10, preferably 1 to 4.

In said formula (7), R⁴ is as defined above; n⁶ is an integer of 1 to 10, preferably 1 to 5; n⁷ is 1 or 2; and the value of n⁶ + n⁷ is an integer of 3 to 12, preferably 3 to 7.

In said formula (8), R⁴ and R⁵ are as defined above, r is an integer of 0 to 3, R⁷ is a hydrogen atom or one or more groups selected from an alkyl group having 1 to 10 carbon atoms, preferably 1 to 4 carbon atoms, and an alkoxyalkyl group having 2 to 10 carbon atoms, preferably 2 to 4 carbon atoms. One or more R⁵s or R⁷s are a hydrogen atom.

Examples of the organohydrogen polysiloxane include compounds represented by the following formulas.

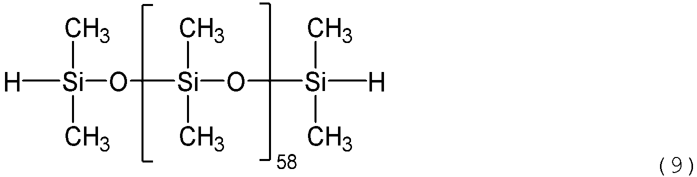

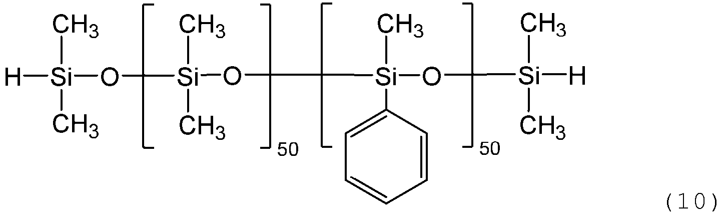

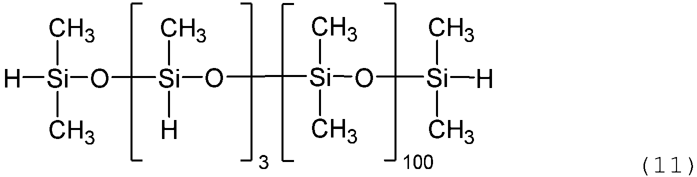

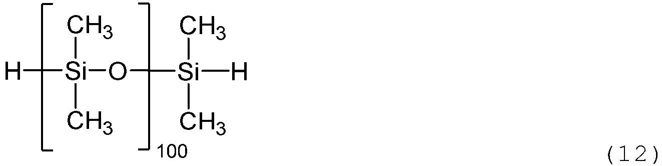

The organohydrogen polysiloxane preferably has a weight-average molecular weight of 100 to 100,000, more preferably 500 to 20,000. When the weight-average molecular weight of the organohydrogen polysiloxane is within this range, a uniform structure in which the organohydrogen polysiloxane is uniformly dispersed within a matrix, or a sea-island structure in which the organohydrogen polysiloxane forms fine phase separation within the matrix, can be obtained, depending on the structure and/or weight-average molecular weight of the alkenyl group-containing epoxy resin to be reacted with the organohydrogen polysiloxane.

A uniform structure is formed when the weight-average molecular weight of the organohydrogen polysiloxane is relatively small, particularly 100 to 10,000. A sea-island structure is formed when the weight-average molecular weight of the organohydrogen polysiloxane is relatively large, 10,000 to 100,000. Either a uniform structure or a sea-island structure may be selected depending on the intended application. When the weight-average molecular weight of the organohydrogen polysiloxane is less than 100, the resulting cured product tends to be rigid and brittle, which is undesirable. When the weight-average molecular weight of the organohydrogen polysiloxane is larger than 100,000, the size of the sea-island domains increases, which may result in localized stress in the cured product.

In the present invention, the weight-average molecular weight refers to a value determined by gel permeation chromatography (GPC), using polystyrene as the reference material, under the following conditions.

GPC measurement conditions:
Developing solvent: Tetrahydrofuran
Flow rate: 0.6 mL/min
Column: TSK Guard column Super H-L
TSK gel Super H4000 (6.0 mm I.D. x 15 cm x 1)
TSK gel Super H3000 (6.0 mm I.D. x 15 cm x 1)
TSK gel Super H2000 (6.0 mm I.D. x 15 cm x 2), each manufactured by Tosoh Corporation
Column temperature: 40 °C
Sample injection amount: 20 µL (sample concentration: 0.5% by mass-tetrahydrofuran solution)
Detector: Differential refractometer (RI)

Methods for reacting the alkenyl group-containing epoxy resin with the organohydrogen polysiloxane are not particularly limited, and known methods may be used. For example, an addition (hydrosilylation) reaction between the alkenyl group-containing epoxy resin and the organohydrogen polysiloxane may be carried out in the presence of a platinum catalyst. By such a reaction, a silicone-modified epoxy resin can be obtained. Preferably, the organohydrogen polysiloxane is used in an amount such that the amount of Si-H groups is 0.1 to 1 mol per mol of alkenyl groups in the alkenyl group-containing epoxy resin.

The amount of the silicone-modified epoxy resin (F) is not particularly limited, as long as it is 0 to 1000 parts by mass per 100 parts by mass of the epoxy resin (A). When the component (F) is included, the amount thereof is preferably 0.1 to 1000 parts by mass, more preferably 5 to 750 parts by mass, and still more preferably 10 to 500 parts by mass, per 100 parts by mass of the epoxy resin (A).

### Other additives

The epoxy resin composition according to an aspect of the present invention may further comprise one or more other additives, in addition to components (A) to (F), as necessary, as long as the effects of the present invention are not impaired. Examples of such additives include a colorant, a flame retardant, an antioxidant, an adhesion promoter, a stress-relaxing agent, and an antifoaming agent. The amount of the other additives may vary depending on the intended application of the epoxy resin composition, and may be appropriately selected, as long as the effects of the present invention are not impaired. For example, the total amount of the other additives is preferably 5% or less by mass, based on the total mass of the epoxy resin composition.

When the epoxy resin composition according to an aspect of the present invention is stored at room temperature, it may be stored as a two-component composition. In such a case, the base component preferably comprises component (A), component (E), and optionally component (F), and the curing agent component preferably comprises component (B) and component (E). Component (C) and component (D) may be incorporated into either the base component or the curing agent component. Accordingly, in one aspect, the present invention preferably provides a two-component kit for forming the epoxy resin composition, the kit comprising a first agent (base resin component) comprising component (A), a part of component (E), and optionally component (F), and a second agent (curing agent component) comprising component (B) and the remainder of component (E), wherein component (C), component (D), and other optional components are comprised in either the first agent or the second agent, or in both. The mixing ratio of the first agent (base resin component) to the second agent (curing agent component) may be adjusted such that the amounts of components (A) to (F) in the total composition fall within the aforementioned ranges.

The epoxy resin composition according to an aspect of the present invention is preferably liquid at 25 °C. The epoxy resin composition has a viscosity at 25 °C of 10 to 500 Pa·s, preferably 20 to 400 Pa·s, and more preferably 30 to 300 Pa·s. The viscosity is measured at 25 °C using a rotational viscometer in accordance with JIS Z 8803:2011.

### Method for Producing Epoxy Resin Composition

The method for producing the epoxy resin composition according to an aspect of the present invention is not particularly limited. For example, components (A) to (F) may be mixed, stirred, dissolved, and/or dispersed, simultaneously or separately, while optionally applying heat. The devices used for mixing, stirring, and dispersion in the production method are not particularly limited. For example, a milling machine equipped with stirring and heating devices, a ball mill, a planetary mixer, mass-colloider, or other devices may be used, alone or in appropriate combination.

The curing conditions of the epoxy resin composition according to an aspect of the present invention are not particularly limited and may include heating at a temperature of 60 to 200 °C, preferably 80 to 180 °C, for 30 minutes to 10 hours, preferably 1 to 5 hours. The epoxy resin composition can be sufficiently cured at a low temperature and in a short time. Thus, sufficient curing can be achieved, even at a temperature of 100 to 120 °C for 1 to 2 hours.

An aspect of the present invention further provides a potting agent comprising the aforementioned epoxy resin composition. The content of the epoxy resin composition in the potting agent may be appropriately selected in accordance with conventional potting agents. The present invention also provides a power module encapsulated using the potting agent. The method for encapsulating the power module with the potting agent is not particularly limited.

An aspect of the present invention further provides an underfill material comprising the aforementioned epoxy resin composition. The content of the epoxy resin composition in the underfill material may be appropriately selected in accordance with conventional underfill materials. The present invention also provides a flip-chip package encapsulated using the underfill material. The method for encapsulating the flip-chip package with the underfill material is not particularly limited.

An aspect of the present invention further provides an epoxy resin adhesive comprising the aforementioned epoxy resin composition. The content of the epoxy resin composition in the adhesive may be appropriately selected in accordance with conventional epoxy resin adhesives. The present invention also provides a semiconductor device having a layer formed from the adhesive. The method for producing the semiconductor device is not particularly limited.

### EXAMPLES

Embodiments of the present invention will be explained in more detail with reference to the following Examples and Comparative Examples; however, the present invention is not limited to the following Examples.

Examples 1 to 10 and Comparative Examples 1 to 6

The following components were mixed at 25 °C in the compositions shown in Tables 1 and 2 to prepare epoxy resin compositions.

### (A) Epoxy resin

Epoxy resin (A1), liquid at 25 °C: bisphenol A-type epoxy resin (YD-8125: manufactured by Nippon Steel Chemical & Material Co., Ltd.), viscosity at 25 °C: 4,000 mPa·s, epoxy equivalent: 173 g/eq Epoxy resin (A2), liquid at 25 °C: aminophenol-type trifunctional epoxy resin (jER630: manufactured by Mitsubishi Chemical Corporation), viscosity at 25 °C: 600 mPa·s, epoxy equivalent: 98 g/eq

(B) Aromatic amine curing agent Aromatic amine curing agent, liquid at 25 °C: 3,3'-diethyl-4,4'-diaminodiphenylmethane (Kayahard AA: manufactured by Nippon Kayaku Co., Ltd.), amine equivalent: 64/eq

### (C) Metal chelate compound

(C1) Aluminum-tris(acetylacetonate), volume average particle size: 5 µm
(C2) Aluminum-tris(acetylacetonate), volume average particle size: 25 µm
(C3) Aluminum-tris(acetylacetonate), volume average particle size: 45 µm
(C4) Aluminum-tris(acetylacetonate), volume average particle size: 70 µm
All of the metal chelate compounds have a melting point of 195 °C.

### Metal chelate for comparison

(C') Aluminum-tris(acetylacetonate), volume average particle size: 100 µm.
(D) Diphenyldimethoxysilane (KBM-202SS: manufactured by Shin-Etsu Chemical Co., Ltd.)
(E) Spherical silica surface-treated with N-phenyl-3-aminopropyltrimethoxysilane, volume average particle size: 15 µm
(F) Silicone-modified epoxy resin Into a four-necked flask having an internal volume of 1 L and equipped with a reflux condenser, a thermometer, a stirrer, and a dropping funnel were charged 200 g of a phenol novolac resin modified with allyl glycidyl ether (having a phenol equivalent of 125 and an allyl equivalent of 1,100), as represented by formula (13) below, 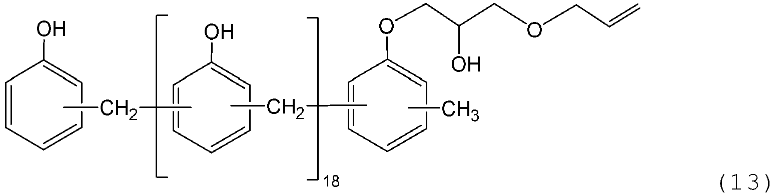 800 g of chloromethyloxirane, and 0.6 g of cetyltrimethylammonium bromide. The mixture was heated with stirring at 110 °C for 3 hours. After cooling the reaction mixture to 70 °C and reducing the pressure to 160 mmHg, 128 g of a 50% aqueous sodium hydroxide solution was added dropwise over 3 hours while azeotropically removing water. The solvent was removed by evaporation under reduced pressure. The residue was then dissolved in a mixed solvent of 300 g of methyl isobutyl ketone and 300 g of acetone, followed by washing with water. Thereafter, the solvent was removed by evaporation under reduced pressure to obtain an allyl group-comprising epoxy resin (having an allyl equivalent of 1,590 and an epoxy equivalent of 190), as represented by formula (14) below. 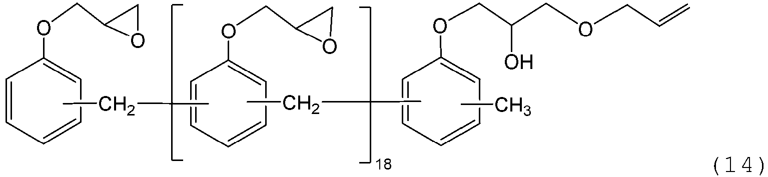 To the epoxy resin thus obtained were added 170 g of methyl isobutyl ketone, 330 g of toluene, and 0.07 g of a 2-ethylhexanol-modified chloroplatinic acid catalyst solution containing 2% by mass of platinum. The mixture was heated for 1 hour while azeotropically removing water. Thereafter, 133 g of an organopolysiloxane having a weight-average molecular weight of 8,000, as represented by formula (12) below, was added dropwise over 30 minutes at the reflux temperature. 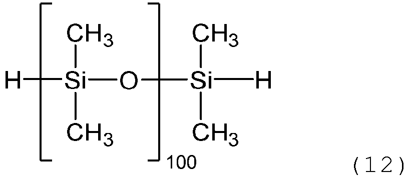 The reaction was further continued with stirring at the same temperature for 4 hours. The mixture was then washed with water, and the solvent was removed by evaporation under reduced pressure to obtain a yellowish, white opaque, solid copolymer. The solid copolymer had an epoxy equivalent of 280, an ICI melt viscosity of 800 mPa·s, as measured at 150 °C using a cone-plate viscometer in accordance with ASTM D4287, and a silicon content of 31% by mass.

Colorant: Carbon black (Denka Black Li100 manufactured by Denka Company Ltd.)

### Evaluations

Each epoxy resin composition of Examples 1 to 10 and Comparative Examples 1 to 6 was evaluated by tests according to the following evaluation methods. The results are shown in Tables 1 and 2.

### (1) Curability

Five grams of each epoxy resin composition after preparation was placed in an aluminum petri dish and heated on a hotplate at 120 °C for 60 minutes. Samples that formed cured products were evaluated as "good", whereas samples that did not sufficiently cure and remained fluid were evaluated as "poor".

### (2) Surface Appearance of Cured Product

For the Examples and Comparative Examples in which cured products were obtained in (1), the surface appearance of the cured products was evaluated. Samples having a good surface appearance without voids or other defects were evaluated as "good", whereas samples in which voids were observed were evaluated as "poor".

### (3) Glass Transition Temperature (Tg)

The epoxy resin composition after preparation was placed in a mold having a cavity of 5 mm x 5 mm x 15 mm and cured at 150 °C for 1 hour to form test pieces. The dimensional change of the test pieces was measured using a TMA (thermomechanical analyzer) while heating at a rate of 5 °C/min. The relationship between dimensional change and temperature was plotted on a graph, and the glass transition temperature was determined from the resulting graph.

### (4) Viscosity Increase Ratio

The viscosity of the epoxy resin composition at 25 °C was measured using a rotational viscometer in accordance with JIS Z 8803:2011. After storage at 25 °C and 25% relative humidity for 12 hours, the viscosity was measured again under the same conditions. The viscosity increase ratio was calculated as the ratio of the viscosity after storing to the viscosity before storing, i.e., (viscosity after storage)/(viscosity before storage).

**[Table 1]**

| | Ex. 1 | Ex.2 | Ex.3 | Ex.4 | Ex.5 | Ex.6 | Ex.7 | Ex.8 | Ex.9 | Ex. 10 |
|---|---|---|---|---|---|---|---|---|---|---|
| Epoxy resin (A1) | 70 | 70 | 70 | 70 | 70 | 60 | 70 | | | |
| Epoxy resin (A2) | | | | | | | | 60 | 60 | 60 |
| Silicone-modified epoxy resin (F) | | | | | | 15 | | | | |
| Amine curing agent (B) | 30 | 30 | 30 | 30 | 30 | 25 | 30 | 40 | 40 | 40 |
| Epoxy/Amine (molar ratio) | 1 | 1 | 1 | 1 | 1 | 1.1 | 1 | 1 | 1 | 1 |
| Metal chelate compound (C1) | 0.5 | 0.5 | | | | | | | | |
| Metal chelate compound (C2) | | | 0.5 | | | 0.2 | | 0.5 | 1 | 1 |
| Metal chelate compound (C3) | | | | 0.5 | | | 0.3 | | | |
| Metal chelate compound (C4) | | | | | 0.5 | | | | | |
| Metal chelate compound (C') for Comparative Example | | | | | | | | | | |
| Silane compound (D) | 1 | 1 | 1 | 1 | 1 | 2 | 1 | 1 | 1 | 2 |
| Inorganic filler (E) | 400 | 400 | 400 | 400 | 400 | 400 | 300 | 500 | 400 | 400 |
| Colorant | 1 | | 1 | 1 | 1 | 1 | 1 | 1 | 1 | 1 |
| Curability | Good | Good | Good | Good | Good | Good | Good | Good | Good | Good |
| Surface appearance of cured product | Good | Good | Good | Good | Good | Good | Good | Good | Good | Good |
| Glass transition temperature (°C) | 149 | 151 | 148 | 146 | 146 | 144 | 147 | 164 | 165 | 165 |
| Viscosity increase ratio, Viscosity after storage / Viscosity before storage | 2.3 | 2.3 | 2.3 | 2.2 | 2.2 | 3.1 | 2.3 | 1.9 | 1.9 | 2.0 |

**[Table 2]**

| | Com. Ex.1 | Com. Ex.2 | Com. Ex.3 | Com. Ex.4 | Com. Ex.5 | Com. Ex.6 |
|---|---|---|---|---|---|---|
| Epoxy resin (A1) | 70 | 70 | 70 | 70 | | 70 |
| Epoxy resin (A2) | | | | | 60 | |
| Silicone-modified epoxy resin (F) | | | | | | |
| Amine curing agent (B) | 30 | 30 | 30 | 30 | 40 | 30 |
| Epoxy/Amine (molar ratio) | 1 | 1 | 1 | 1 | 1 | 1 |
| Metal chelate compound (C1) | | 0.5 | | | | |
| Metal chelate compound (C2) | | | | | | |
| Metal chelate compound (C3) | | | | | | 1 |
| Metal chelate compound (C4) | | | | | | |
| Metal chelate compound (C') for Comparative Example | | | | 0.5 | 0.5 | |
| Silane compound (D) | | | 1 | 1 | 1 | 11 |
| Inorganic filler (E) | 400 | 400 | 400 | 400 | 400 | 400 |
| Colorant | 1 | 1 | 1 | 1 | 1 | 1 |
| Curability | Poor | Poor | Poor | Good | Good | Good |
| Surface appearance of cured product | - | - | - | Poor | Poor | Good |
| Glass transition temperature (°C) | - | - | - | 140 | 159 | 140 |
| Viscosity increase ratio, Viscosity after storage / Viscosity before storage | 2.1 | 2.0 | 1.8 | 2.3 | 1.8 | 7.8 |

As shown in Table 2, the epoxy resin composition of Comparative Example 1, which did not comprise either metal chelate compound (C) or the silane compound (D), and the epoxy resin compositions of Comparative Examples 2 and 3, which did not comprise one of the metal chelate compound (C) or the silane compound (D), did not sufficiently cure under conditions of 120 °C for 60 minutes.

In contrast, as shown in Table 1, the epoxy resin compositions of the present invention, which comprised both the metal chelate compound (C) and the silane compound (D) in predetermined amounts, sufficiently cured under conditions of 120 °C for 60 minutes. Thus, it is considered that, in the epoxy resin compositions of the present invention, the interaction between the metal chelate compound (C) and the silane compound (D) serves to promote curing.

The epoxy resin compositions of Comparative Examples 4 and 5, which used the metal chelate (C') having a large particle size, exhibited poor surface appearance and provided a cured product having poor appearance. The epoxy resin composition of Comparative Example 6, in which the amount of the silane compound was too high, exhibited increased viscosity over time, resulting in a reduced pot life. In contrast, the epoxy resin compositions of the present invention exhibited little change in viscosity over time and provided cured products having good appearance.

As described above, the epoxy resin compositions of the present invention are curable in a short time and/or at a low temperature, have a good pot life, and provide cured products having good appearance. The epoxy resin compositions are useful as potting agents, underfill materials, and epoxy resin adhesives.

## Claims

1. An epoxy resin composition, comprising
(A) an epoxy resin that is not silicone-modified and has two or more epoxy groups per molecule,
(B) an aromatic amine curing agent having two or more amino groups per molecule, in an amount such that the ratio of moles of amino groups in component (B) is 0.8 to 1.2, relative to one molar equivalent of epoxy groups in component (A),
(C) a metal chelate compound having an average particle size of 0.1 to 90 µm, in an amount of 0.05 or more parts by mass and less than 3 parts by mass, relative to a total 100 parts by mass of components (A) and (B),
(D) one or more selected from the group consisting of an alkoxysilane having one or more phenyl groups per molecule and one or more alkoxy groups per molecule, and a partially hydrolyzed condensate of the alkoxysilane, in an amount of 0.5 or more parts by mass and less than 3 parts by mass, relative to a total 100 parts by mass of components (A) and (B), and
(E) an inorganic filler, in an amount of 10 or more parts by mass and 1,000 parts or less by mass, relative to total 100 parts by mass of components (A) and (B).

2. The epoxy resin composition according to claim 1, wherein component (C) is a compound represented by the following formula (1): 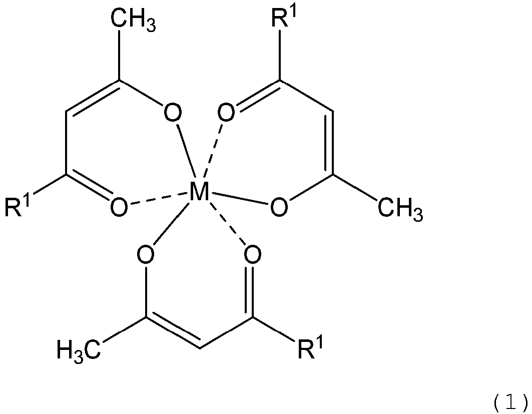 wherein M is aluminum or gallium, and R¹ is, independently of each other, an alkoxy group having 1 to 5 carbon atoms or an alkyl group having 1 to 12 carbon atoms.

3. The epoxy resin composition according to claim 2, wherein component (C) is one or more selected from the group consisting of aluminum-tris(acetylacetonate), aluminum-tris(ethyl acetoacetate), and gallium-tris(acetylacetonate).

4. The epoxy resin composition according to any one of claims 1 to 3, wherein the alkoxysilane of component (D) has one or more alkoxy groups having 1 to 4 carbon atoms.

5. The epoxy resin composition according to any one of claims 1 to 4, wherein the partially hydrolyzed condensate of component (D) is an oligomer having a degree of polymerization of 5 or less and having one or more silanol groups.

6. The epoxy resin composition according to any one of claims 1 to 5, wherein in component (D)
the alkoxysilane of component (D) is represented by the following formula (2): 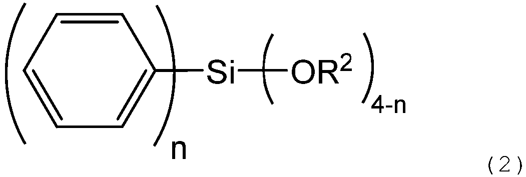 wherein R² is an alkyl group having 1 to 4 carbon atoms, and n is an integer of 1 to 3,
and the partially hydrolyzed condensate of component (D) is an oligomer of the alkoxysilane represented by said formula (2) having a degree of polymerization of 5 or less.

7. The epoxy resin composition according to any one of claims 1 to 6, wherein the ratio of the mass of component (D) relative to the mass of component (C), expressed as the mass ratio of [(D)/(C)], is 0.05/1 to 20/1.

8. The epoxy resin composition according to any one of claims 1 to 7, wherein component (E) is an inorganic filler surface-treated with a silane coupling agent.

9. The epoxy resin composition according to any one of claims 1 to 8, further comprising (F) a silicone-modified epoxy resin in an amount of 0.1 to 1,000 parts by mass, relative to 100 parts by mass of component (A).

10. A potting agent comprising the epoxy resin composition according to any one of claims 1 to 9.

11. A power module encapsulated with the potting agent according to claim 10.

12. An underfill material comprising the epoxy resin composition according to any one of claims 1 to 9.

13. A flip-chip package encapsulated with the underfill material according to claim 12.

14. An epoxy resin adhesive comprising the epoxy resin composition according to any one of claims 1 to 9.

15. A semiconductor device comprising a layer formed from the epoxy resin adhesive according to claim 14.
